# EUROPEAN PATENT APPLICATION

(11) **EP 2 083 506 A1**
(43) Date of publication of application: **29.07.2009**
(21) Application number: 09000855.8
(22) Date of filing: 22.01.2009
(51) Int. Cl.: H02K 7/14, H02K 9/06, H02K 29/08

(54) **Motor-operated fan apparatus**

(30) Priority: 24.01.2008 JP 2008013741
(71) Applicant: Calsonic Kansei Corporation, Saitama-shi Saitama 331-8501 (JP)
(72) Inventor: Kawachi, Katsuyoshi, Saitama-shi Saitama 331-8501 (JP); Nakamura, Shiro, Saitama-shi Saitama 331-8501 (JP); Ohira, Shigenori, Saitama-shi Saitama 331-8501 (JP); Yamada, Kazunori, Saitama-shi Saitama 331-8501 (JP); Kawarai, Hiromi, Saitama-shi Saitama 331-8501 (JP); Sano, Narihito, Saitama-shi Saitama 331-8501 (JP)
(74) Representative: LOUIS, PÖHLAU, LOHRENTZ

(57) **Abstract**

A motor-operated fan apparatus (F) is made up of a brushless motor (10) and a centrifugal fan (20). The brushless motor (10) has: a rotary shaft (12) vertically disposed on a substrate (11) in a rotatable manner; a stator (13) disposed coaxially with the rotary shaft (12); and a rotor (14) integrally disposed on the rotary shaft (12). The centrifugal fan (20) has: a disk part (21) which covers the brushless motor (10) and is fixed to the rotary shaft (12); and a multiplicity of vane parts (22) which are disposed so as to be elongated from an outer edge of the disk part (21). A ventilation control member (30) is provided in a space between the rotor (14) and the disk part (21) to block the air flowing from the substrate side to the space between the rotor (14) and the disk part (21).

## Description

### BACKGROUND OF THE INVENTION

### Field of the Invention

The present invention relates to a motor-operated (or an electrically powered) fan apparatus which is provided with an outer-rotor type of brushless motor and a centrifugal fan with the brushless motor serving as a driving source.

### Description of the Related Art

There has conventionally been known a motor-operated fan apparatus which is provided with an outer-rotor type of brushless motor, and a centrifugal fan having a disk part to cover the brushless motor. In the apparatus the rotor of the brushless motor has formed therein discharge openings for cooling the stator, and the disk part has formed therein ventilation openings for the air from the discharge openings to flow therethrough (see, e.g., JP-T-2002-540754).

Recently, there is a tendency to minimize the brushless motor to be disposed inside the centrifugal fan in order to decrease the weight of the motor-operated fan apparatus.

On the other hand, it is necessary to keep the air delivery force, i.e., an output, at substantially the same level as the conventional one. Therefore, it was difficult to reduce the size of the centrifugal fan.

As a solution, it is conceivable to try to decrease the weight of the motor-operated fan apparatus only by minimizing the brushless motor. In this case, however, the space between the rotor of the brushless motor and the disk part of the centrifugal fan becomes so large that there is a possibility that the air from the substrate side is likely to flow into this space.

A problem will then occur in that the air hardly flows into the clearance between the rotor and the stator, whereby the stator cannot be sufficiently cooled.

Therefore, the invention has a problem of providing a motor-operated fan apparatus in which the space between the rotor of the brushless motor and the disk part of the centrifugal fan is relatively large but in which the cooling of the stator can be sufficiently performed.

### SUMMARY OF THE INVENTION

According to an aspect of the invention, there is provided a motor-operated fan apparatus comprising a brushless motor and a centrifugal fan. The brushless motor has a rotary shaft vertically disposed on a substrate in a rotatable manner, a stator disposed coaxially with the rotary shaft, and a rotor integrally disposed on the rotary shaft so as to be rotatable about the stator at a given distance to the substrate. The centrifugal fan has a disk part which covers the brushless motor and is fixed to the rotary shaft, and a multiplicity of vane parts which are disposed so as to be elongated from an outer edge of the disk part in an axial direction. The rotor has formed therein an exhaust opening for discharging the air passing from a substrate side through a clearance between the stator and the rotor. The disk part has formed therein a ventilation opening for allowing the air through the exhaust opening to flow therethrough. A ventilation control member is provided in a space between the rotor and the disk part to block the air flowing from the substrate side to the space between the rotor and the disk part.

According to the above-described arrangement, the ventilation control member can block the flow of air from the substrate side to the space between the rotor and the disk part. Therefore, even if the space between the rotor of the brushless motor and the disk part of the centrifugal fan is relatively large, it is possible to let the air from the substrate side to be directed into the clearance between the rotor and the stator. As a result, the stator can be sufficiently cooled.

### BRIEF DESCRIPTION OF THE DRAWINGS

FIG. 1 is a vertical sectional view of a motor-operated fan apparatus according to the invention; and
FIG. 2 is a vertical sectional view of a modified example of a motor-operated fan apparatus according to the invention.

### DETAILED DESCRIPTION OF THE PREFERRED EMBODIMENTS

Description will now be made, with reference to the accompanying drawings, about the best mode of the motor-operated fan apparatus relating to the invention.

The motor-operated fan apparatus F of the invention is used for cooling a radiator, condenser, and the like of a motor vehicle (not illustrated).

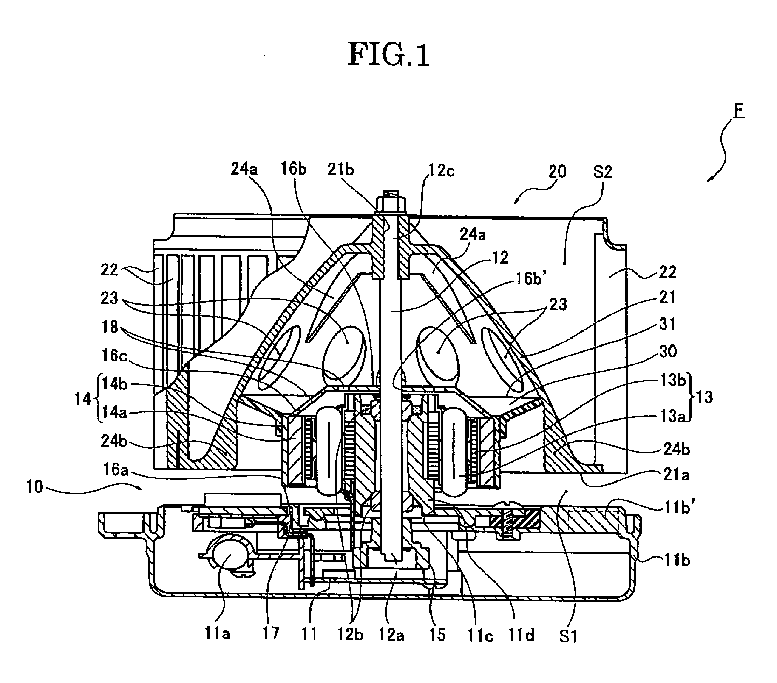

The motor-operated fan apparatus F is made up, as shown in FIG. 1, of a brushless motor 10, and a centrifugal fan 20 which is driven by this brushless motor 10.

The brushless motor 10 is made up of a rotary shaft 12 which is vertically disposed from an electrical circuit substrate (substrate) 11 in a manner to be rotatable; a stator 13 which is disposed coaxially with the rotary shaft 12; and a rotor 14 which is integrally disposed on the rotary shaft 12 so as to be rotatable about the stator 13 with a predetermined clearance to the electric circuit board 11.

In other words, this brushless motor 10 is a so-called outer-rotor type of brushless motor in which the rotor 14, i.e., a rotary element, is disposed on an outer side of the stator 13, i.e., a stationary element,

The electric circuit board 11 is provided with: a wiring pattern such as a driving circuit, a control circuit, and the like; and an electrolytic condenser 11a; and the like. The electric circuit board 11 is housed in the circuit protection casing 11b.

An upper case 11b' of this circuit protection casing 11b has formed therein a boss part 11c into which one end part 12a of the rotary shaft 12 is inserted.

The rotary shaft 12 is rotatably supported, through bearing parts 12b, on a shaft support part 11d which rises from the boss part 11c of the circuit protection casing 11b. According to this arrangement, the rotary shaft 12 is disposed vertically in a manner to be rotatable.

One end part 12a of the rotary shaft 12 inserted into the circuit protection casing 11b has fixed thereto a sensor magnet 15. This sensor magnet 15 is so arranged that the rotary position of the permanent magnet 14a of the rotor 14 (to be described hereinafter) can be detected in cooperation with a Hall device (not illustrated) mounted on the electric circuit substrate 11.

The stator 13 is made up of a core 13a which is made by laminating metallic thin plates, and a coil 13b which is wound around the core 13a.

The core 13a is fixed to an outer periphery of the shaft holding part 11d which supports the rotary shaft 12 in a rotatable manner through the bearing parts 12b. As a result, the stator 13 is disposed coaxially with the rotary shaft 12.

The rotor 14 is made up of permanent magnets 14a, 14a, ...which are disposed in close proximity to the outside of the stator 13; and a yoke 14b which holds these permanent magnets 14a, 14a, ... and which is Also fixed to the rotary shaft 12 while covering or enclosing the stator 13.

The yoke 14b is made up of a cylindrical main body part 16a; a closing end part 16b which closes one end of the main body part 16a; and an inclined surface part 16c which is inclined in a manner to chamfer the main body part 16a and the closing end part 16b.

The yoke 14b is so arranged that the central portion 16b' of the closing end part 16b is fixed to the rotary shaft 12 in a state in which the open end 17, which is the other end of the main body part 16a, faces the circuit protection casing 11b and with a predetermined clearance thereto.

The closing end part 16b and the inclined surface part 16c have formed therein a plurality of exhaust openings 18.

The exhaust openings 18 are portions through which is exhausted or discharged the air flowing from the open end 17 of the yoke 14b, which corresponds to the side of the electric circuit substrate 11, to the clearance between the stator 13 and the rotor 14. In other words, the air passing through the inside of the yoke 14b flows through the exhaust openings 18.

On the other hand, a plurality of permanent magnets 14a are mounted on an inner circumference of the main body part 16a enclosing the stator 13, in a state in which different magnetic poles are alternately arranged in the circumferential direction.

According to this arrangement, the rotor 14 is disposed coaxially with the rotary shaft 12 and the stator 13. As a result of alternate magnetic function of the permanent magnets 14a and the stator 13, the rotor 14 is rotatable integrally with the rotary shaft 12 in a state in which a clearance is secured between the open end 17 of the yoke 14b and the circuit protection casing 11b.

In other words, the rotor 14 is disposed so as to be rotatable integrally with the rotary shaft 12, and rotates around the stator 13 while keeping a clearance between the circuit protection casing 11b and the electric circuit substrate 11.

Further, between the main body part 16a and the inclined surface part 16c of the yoke 14b, there is provided a ventilation control plate (ventilation control member) 30 which projects toward the disk part 21 (to be described hereinafter) of the centrifugal fan 20.

The ventilation control plate 30 is integrally fixed to the outer peripheral surface of the main body part 16a and has an annular shape to enclose the yoke 14b. The front end part 31 of the ventilation control plate 30 is proximate to the inner periphery of the disk part 21. The space or clearance between the rotor 14 and the disk part 21 is closed by the ventilation control plate 30.

According to this arrangement, the air that flows from the side of the electric circuit substrate 11 into the clearance between the rotor 14 and the disk part 21 is blocked by the ventilation control plate 30.

The rotor 14 is made of a magnetic metallic material, and the ventilation control plate 30 is formed of a synthetic material. The ventilation control plate 30 is fixed by means of an adhesive and the like.

Centrifugal fan 20 is made up of: the circular disk part 21 which covers or encloses the brushless motor 10 and is fixed to the rotary shaft 12; and a multiplicity of vane parts 22, 22, ... which are vertically disposed in the axial direction from the left-open circular edge part 21a of the disk part 21.

The disk part 21 is of a cup shape as a whole and opens toward the circuit protection casing 11b, and is disposed so as to cover or enclose the yoke 14b of the rotor 14, with the closed edge part 16b being positioned to cover the innermost portion of the yoke 14b. Further, the disk part 21 is so arranged that the central part 21b is fixed to the rotary shaft 12 in a state in which a clearance is secured between the circular edge part 21a and the circuit protection casing 11b. The central part 21b is fixed at the side nearer to the front end 12c of the rotary shaft 12 than at the central part 16b' of the closed end 16b of the yoke 14b.

In addition, the disk part 21 has formed therein a plurality of ventilation openings 23.

The ventilation openings 23 are to allow the air that has leaked through the exhaust openings18, formed in the yoke 14b, to flow therethrough. Each of the ventilation openings 23 is disposed along the circumference of the disk part 21 in a manner to enclose the rotor 14. In addition, the ventilation openings 23 are each formed at a position which is on the side of the central part 21b relative to (or as compared with) the front end 31 of the ventilation control plate 30, the front end 31 of which is proximate to the disk part 21. The ventilation openings 23 are also positioned near the front end 31 of the ventilation control plate 30.

The disk part 21 shown in FIG. 1 is provided with a plurality of first reinforcing ribs 24a, 24a, ... which project inward at a position between the central part 21b inclusive of its neighborhood and the closing end 16b of the yoke 14b. These first reinforcing ribs 24a, 24a, ... serve to increase the strength of mounting the disk part 21 to the rotary shaft 12.

Further, at a position between the circular edge 21a of the disk part 21 and the ventilation openings 23, there are provided a plurality of second reinforcing ribs 24b, 24b, ... These second reinforcing ribs 24b, 24b, ... serve to increase the strength of the circular edge 21a of the disk part 21.

The vanes 22 are disposed such that one end of each is held by the circular edge 21a of the disk part 21 and that each vane is at a distance to each other in the circumferential direction in parallel with the rotary shaft 12.

Description will now be made about the function/operation of the motor-operated fan apparatus F according to the invention.

In this motor-operated fan apparatus F, depending on the position of the permanent magnet 14a of the rotor 14 as detected by the sensor magnet 15 fixed to the rotary shaft 12, the coils 13b of the stator 13 are alternately charged with electric power from the electric circuit board 11. As a result, a rotating magnetic field is generated in the permanent magnets 14a of the rotor 14, whereby the yoke 14b and the rotary shaft 12 and the centrifugal fan 20 rotate integrally.

At this time, as a result of rotation of the centrifugal fan 20, the space S1 between the open end 17 of the yoke 14b as well as the circular edge 21a of the disk part 21, and the circuit protection casing 11b (hereinafter referred to as suction space) becomes high in pressure. The space S2 between the disk part 21 and a plurality of vanes 22 (hereinafter referred to as a discharge space) becomes negative in pressure.

Therefore, a flow of air is generated from the high pressure suction space S1 to the negative pressure discharge space S2.

At this time, the air will flow from the open end 17 of the main body part 16a, the open end 17 being open toward the circuit protection casing 11b, to the main body part 16a of the yoke 14b. The air will, then, move from the plurality of exhaust openings 18 formed in the closing end part 16b and the inclined surface part 16c toward the plurality of ventilation openings 23 formed in the disk part 21.

The yoke 14b of the rotor 14 is provided with a ventilation control plate 30 which projects toward the disk part 21. The ventilation control plate 30 serves the purpose of closing the space between the rotor 14 and the disk part 21. The air which flows into this space will therefore be blocked (or prevented from flowing through).

According to this arrangement, even in case the space or clearance between the rotor 14 and the disk part 21 is relatively large, the air from the suction space S1 hardly flows into the above-described space or clearance. Instead, the air is likely to flow inward so that it becomes possible for the air to flow toward the stator 13 covered by the rotor 14. In this manner, the stator 13 can be sufficiently cooled.

In the above-described embodiment, the ventilation control plate 30 is integrally fixed to the outer periphery of the main body part 16a of the rotor 14.

According to this arrangement, the ventilation control plate 30 can be rotated stably together with the rotor 14 without giving rise to clattering, whereby the air flow can be controlled in a stable state.

Furthermore, in the above-described embodiment, the ventilation control plate 30 projects from a point between the main body part 16a and the inclined surface 16c of the yoke 14b. The front end part 31 is positioned near the ventilation openings 23 formed in the disk part 21.

The exhaust openings 18 are formed in the inclined surface part 16c, and the ventilation openings 23 are formed at a position nearer to the central part 21b relative to (or as compared with) the front part 31 of the ventilation control plate 30.

In other words, the ventilation control plate 30 is disposed so as to bridge (or to be present between) those portions of the exhaust openings 18 which lie on the side of the electric circuit board 11 and those portions of the ventilation openings 23 which lie on the side of the electric circuit board 11.

In this manner, it is possible to let the air coming out of the exhaust openings 18 to be directed smoothly toward the ventilation openings 23. As a result, the flow of air becomes smooth and the cooling of the stator 13 can be more efficiently performed.

Although a preferred embodiment of the invention has been disclosed in detail for illustrative purposes, it will be recognized that variations or modifications of the disclosed apparatus, including the rearrangement of the constituent elements, lie within the scope of this invention.

For example, in the above-described embodiment, the ventilation control plate 30 is integrally fixed to the yoke 14b. The arrangement is not limited to the above.

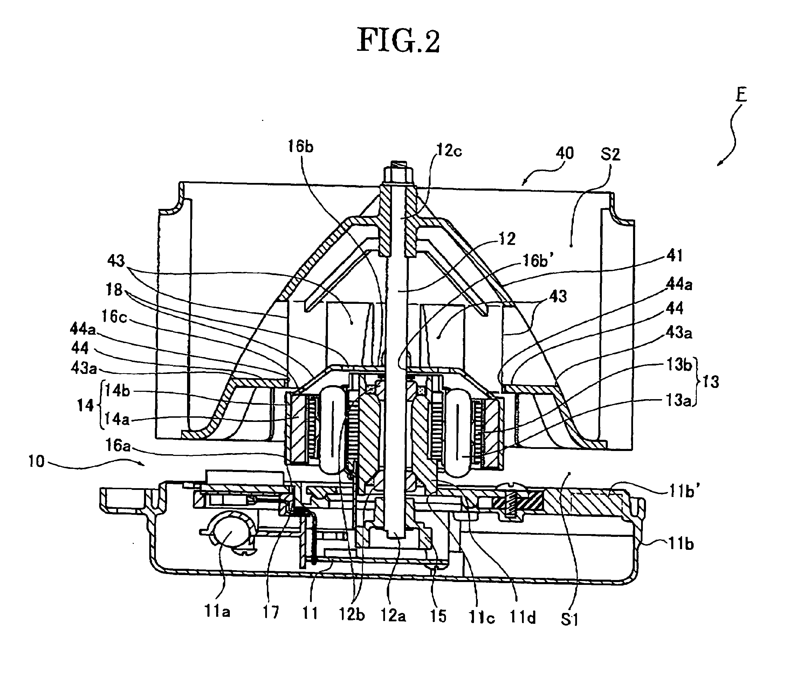

In the example of centrifugal fan 40 shown in FIG. 2, a ventilation control wall 44 as the ventilation control member is formed in an edge part 43a on the side of the electric circuit substrate 11.

This ventilation control wall 44 is elongated from the disk part 41 toward the rotor 14, with the front end thereof being in proximity to the exhaust opening 18 which is formed in the inclined surface 16c of the yoke 14b.

Also in this case, the ventilation control wall 44 can block the air to flow from the suction space S1 into the clearance between the rotor 14 and the disk part 41. Therefore, sufficient air can flow into the inside of the rotor 14, thereby cooling the stator 13.

Furthermore, by extending the ventilation control wall 44 from the edge 43a of the ventilation opening 43 of the disk part 41, the ventilation control wall 44 can be formed integrally by extrusion and the like of a resin. Productivity can thus be improved.

In the above-described embodiments, the motor-operated fan apparatus F is shown to be used for cooling in a radiator and the like for a motor vehicle. The motor-operated fan apparatus of this invention is, however, not limited to the use for a motor vehicle, but may be used for other vehicles such as electric trains, as well as for other industrial vehicles and the like.

## Claims

1. A motor-operated fan apparatus comprising:
a brushless motor (10) having: a rotary shaft (12) vertically disposed on a substrate (11) in a rotatable manner; a stator (13) disposed coaxially with the rotary shaft (12); and a rotor (14) integrally disposed on the rotary shaft (12) so as to be rotatable about the stator (13) at a given distance to the substrate (11);
a centrifugal fan (20) having: a disk part (21) which covers the brushless motor (10) and is fixed to the rotary shaft (12); and a multiplicity of vane parts (22) which are disposed so as to be elongated from an outer edge of the disk part (21) in an axial direction;
wherein the rotor (14) has formed therein an exhaust opening (18) for discharging the air passing from a substrate side through a clearance between the stator (13) and the rotor (14);
wherein the disk part (21) has formed therein a ventilation opening (23) for allowing the air through the exhaust opening (18) to flow therethrough; and
wherein a ventilation control member (30) is provided in a space between the rotor (14) and the disk part (21) to block the air flowing from the substrate side to the space between the rotor (14) and the disk part (21).

2. The motor-operated fan apparatus according to claim 1, wherein the ventilation control member (30) is integrally formed with one of the rotor (14) and the disk part (21).

3. The motor-operated fan apparatus according to claim 1, wherein the ventilation control member (30) is disposed to bridge the substrate side portion of the exhaust opening (18) and the substrate side portion of the ventilation opening (23).
